Europäisches Patentamt

European Patent Office

Office européen des brevets

(19)

(11) **EP 0 854 626 B1**

(12) **FASCICULE DE BREVET EUROPEEN**

(45) Date de publication et mention
de la délivrance du brevet:
**11.08.2004 Bulletin 2004/33**

(51) Int Cl.⁷: **H04M 9/08**

(21) Numéro de dépôt: **98400090.1**

(22) Date de dépôt: **19.01.1998**

(54) **Procédé d'annulation d'écho et annuleur d'écho mettant en oeuvre un tel procédé**

Verfahren und Vorrichtung zur Echokompensation

Method and device for echo cancellation

(84) Etats contractants désignés:
**AT BE DE DK ES FI GB IT NL SE**

(30) Priorité: **21.01.1997 FR 9700575**

(43) Date de publication de la demande:
**22.07.1998 Bulletin 1998/30**

(73) Titulaire: **NORTEL NETWORKS France**
**78117 Châteaufort (FR)**

(72) Inventeurs:
• **Capman, François**
**78000 Versailles (FR)**
• **Boudy, Jérôme**
**78330 Fontenay le Fleury (FR)**

(74) Mandataire: **Loisel, Bertrand**
**Cabinet Plasseraud**
**65/67 rue de la Victoire**
**75440 Paris Cedex 09 (FR)**

(56) Documents cités:
**EP-A- 0 333 581          EP-A- 0 667 700**
**WO-A-96/21313**

• **GAENSLER T ET AL: "A DOUBLE-TALK
DETECTOR BASED ON COHERENCE" IEEE
TRANSACTIONS ON COMMUNICATIONS, vol.
44, no. 11, pages 1421-1427, XP000674158**

**Description**

La présente invention concerne le domaine de l'annulation d'écho. Elle concerne notamment, mais non exclusivement, des annuleurs d'écho acoustique pour installations téléphoniques mains libres.

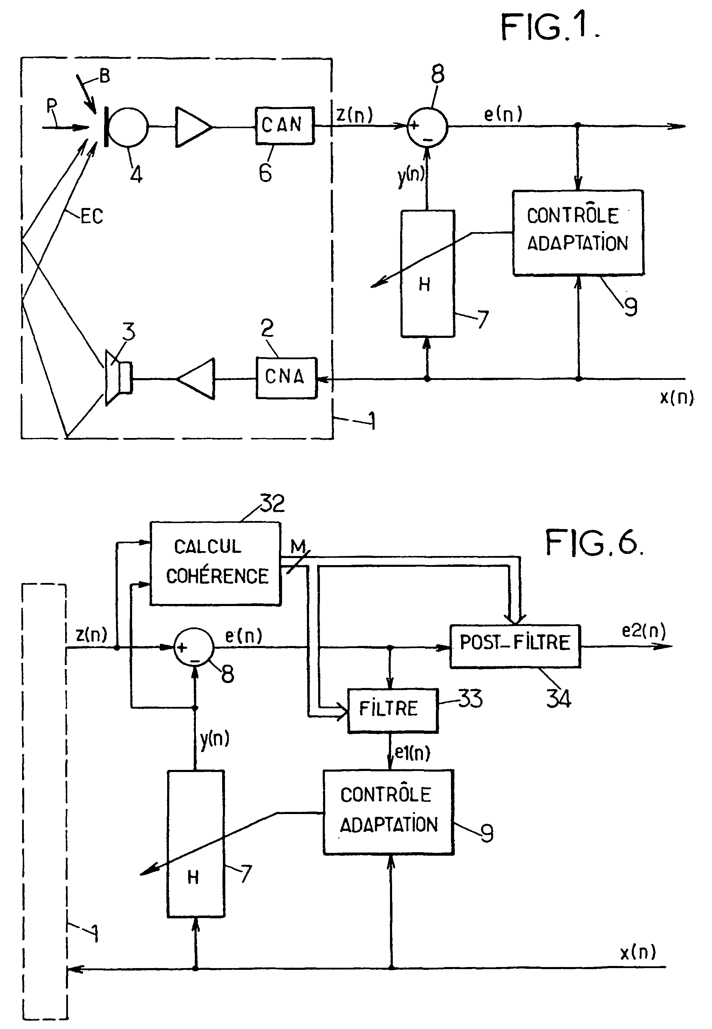

Un annuleur d'écho, dont la figure 1 montre un schéma de principe, traite d'une part un signal de réception x(n) provenant d'un dispositif distant et appliqué à une entrée d'un système local 1, et d'autre part un signal d'observation z(n) issu du système 1, afin de produire un autre signal e(n) qui est retourné vers le dispositif distant par l'intermédiaire d'un canal de communication. On suppose que les signaux x(n) et z(n) sont des signaux numériques, échantillonnés par exemple à 8 kHz pour de la parole en bande téléphonique, ou à 16 kHz en bande élargie.

L'annuleur d'écho représenté sur la figure 1 est destiné à une installation téléphonique mains libres. Le système local 1 comprend ainsi un convertisseur numérique-analogique 2 auquel est appliqué le signal de réception x(n), un haut-parleur 3 recevant la sortie analogique amplifiée du convertisseur 2, un microphone 4 qui capte la parole locale P mais également du bruit ambiant B et des composantes d'écho EC du signal de réception dues aux couplages acoustiques entre le haut-parleur 3 et le microphone 4, et un convertisseur analogique-numérique 6 qui produit le signal d'observation z(n) en numérisant la sortie amplifiée du microphone 4.

L'annuleur d'écho comprend un filtre numérique 7 qui délivre un signal de prédiction d'écho y(n) à partir du signal de réception x(n). Ce filtre, qui est à réponse impulsionnelle finie (RIF) dans le cas considéré en référence à la figure 1, modélise la réponse des trajets d'écho au sein du système 1. Le signal d'erreur e(n) est délivré par un soustracteur 8 qui retranche le signal de prédiction d'écho y(n) du signal d'observation z(n).

Pour tenir compte de la variabilité des trajets d'écho, l'annuleur d'écho est souvent adaptatif, c'est-à-dire que les coefficients du filtre 7 sont réglés dynamiquement par un module 9 de contrôle d'adaptation mettant en oeuvre un algorithme d'adaptation approprié. En général, l'adaptation des coefficients est effectuée en fonction du signal d'entrée x(n) et du signal d'erreur e(n). On connaît de nombreux algorithmes d'adaptation possibles, notamment diverses versions de l'algorithme du gradient.

Fréquemment, l'annuleur d'écho adaptatif est associé à un détecteur d'activité vocale et à un détecteur de double parole non représentés sur la figure 1. Ces détecteurs sont utilisés pour inhiber l'adaptation des coefficients du filtre 7 lorsque le signal de réception x(n) ne comporte aucune activité vocale, et lorsque des activités vocales décorrélées sont présentes dans les signaux x(n) et z(n). En effet, dans ces deux cas de figure, le signal z(n) ne représente pas une bonne observation des trajets d'écho exploitable par le module de contrôle d'adaptation 9. On sait que le détecteur de double parole est la source de nombreuses difficultés pour le concepteur d'un annuleur d'écho. En particulier, ces détecteurs sont fréquemment perturbés lorsque le bruit ambiant B est relativement important. En outre, la discrimination des situations de double parole est souvent délicate, et le contrôle en tout-ou-rien de l'adaptation basé sur cette discrimination nuit à la bonne convergence de l'algorithme.

Il existe différentes formes possibles pour réaliser le filtrage du signal de réception x(n), qui sont à leur tour compatibles avec différents types d'algorithmes d'adaptation. Dans le cas classique de la figure 1, on utilise un filtre RIF 7 réalisant la convolution entre le signal de réception et la réponse impulsionnelle estimée, de longueur N échantillons, des trajets d'écho.

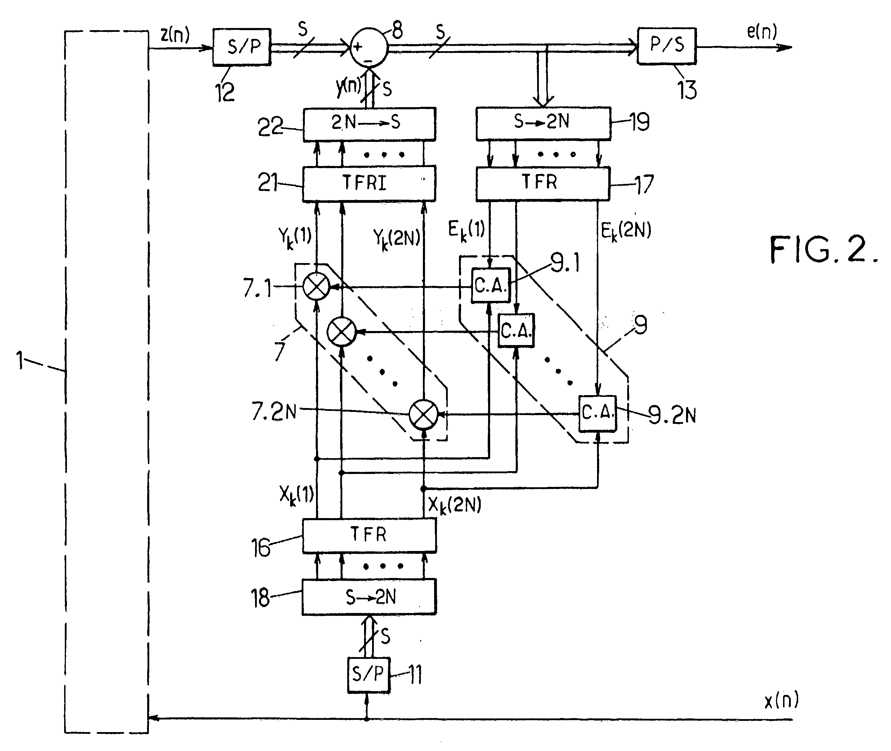

Dans l'exemple de réalisation représenté sur la figure 2, le filtrage est réalisé dans le domaine fréquentiel. Cette implémentation est bien adaptée aux longues réponses impulsionnelles des trajets d'écho et au degré élevé de corrélation que présentent les signaux de parole. Les convolutions sont remplacées par des produits terme à terme entre les transformées de Fourier du signal de réception et de la réponse impulsionnelle, et calculées selon une technique de convolution rapide OLS (Overlap-and-Save) ou OLA (Overlap-Add) (voir J.J. Shynk : "Frequency-Domain and Multirate Adaptive Filtering", IEEE SP Magazine, janvier 1992, pages 15-37). Pour calculer des convolutions par un filtre RIF de N coefficients, la technique OLS ou OLA travaille sur des blocs sucessifs de 2N échantillons des signaux, qui présentent des recouvrements de taille N.

Les moyens de contrôle d'adaptation peuvent être agencés pour calculer le gradient selon un algorithme non contraint, tel que celui décrit par D. MANSOUR et al dans "Unconstrained frequency-domain adaptive filter", IEEE Trans. on Acoustics, Speech and Signal Processing, Vol. 30, n° 5, Octobre 1982, pages 726-734. Tel est le cas de l'exemple représenté sur la figure 2. On peut encore faire appel à un algorithme du gradient contraint (voir par exemple E.R. FERRARA : "Fast implementation of LMS adaptive filters", IEEE Trans. on Acoustics, Speech and Signal Processing, Vol. 28, n° 4, Août 1980, pages 474-475), les moyens de contrôle d'adaptation comportant alors des moyens de projection pour tenir compte du fait que les 2N coefficients de filtrage ne représentent en fait que N termes de la réponse impulsionnelle.

Pour réduire le retard inhérent au traitement par blocs et améliorer les performances, le filtrage dans le domaine fréquentiel peut être effectué avec un partitionnement de la réponse impulsionnelle (voir J.S. Soo et al : "Multidelay Block Frequency Domain Adaptive Filter", IEEE Trans. on Acoustics, Speech and Signal Processing, Vol.38, N°2, février 1990, pages 373-376). Une autre possibilité est d'employer une technique de recouvrement telle que celle décrite par O. Ait Amrane et al : "Low-Delay Frequency Domain LMS Algorithm", IEEE Proc. ICASSP'92, Vol.4, Mars 1992, pages 9-12.

D'autre part, les annuleurs d'écho dans le domaine fréquentiel ont l'avantage de bien se prêter à des traitements de réduction du bruit dans le signal d'erreur (cf. J. BOUDY et al : "A globally optimised frequency-domain acoustic echo canceller for adverse environment applications", Proc. of the International Workshop on Acoustic Echo and Noise Control, Roros, Norvège, Juin 1995, pages 95-98 ; ou la demande internationale de brevet WO96/23384).

Dans l'annuleur d'écho de la figure 2, des convertisseurs série-parallèle 11, 12 reçoivent respectivement les signaux x(n) et z(n), et les mettent sous forme de segments successifs non-recouvrants de S échantillons, S étant un entier inférieur ou égal à la longueur N de la réponse impulsionnelle. Le signal de prédiction d'écho y(n) est également produit sous forme de segments correspondants de S échantillons. Le soustracteur 8 réalise alors l'opération e(n)=z(n)-y(n) en parallèle pour produire le signal d'erreur sous forme de segments de S échantillons qui sont ensuite remis sous forme séquentielle par un convertisseur parallèle-série 13.

Du fait de la technique de convolution employée, qui est une technique OLS dans le cas représenté, les transformées de Fourier des signaux x(n) et e(n) sont réalisées sur des blocs de longueur 2N échantillons, par des unités 16, 17 mettant en oeuvre un algorithme conventionnel de transformation de Fourier rapide (TFR). Les blocs successifs du signal de réception x(n) sont construits par une unité 18 de manière à présenter des recouvrements de 2N-S échantillons. Ces blocs sont numérotés par un indice k. A réception d'un segment de S échantillons du signal x(n), l'unité 18 constitue le bloc k en supprimant les S échantillons les plus anciens du bloc k-1, en décalant les 2N-S échantillons restants, et en introduisant les S nouveaux échantillons. Les blocs successifs du signal d'erreur e(n) sont construits par une unité 19 à partir des segments délivrés par le soustracteur 8 de façon que chaque bloc de longueur 2N commence par N échantillons à zéro et que les N derniers échantillons de deux blocs successifs présentent des recouvrements de N-S échantillons. On note respectivement $X_k(f)$ et $E_k(f)$ ($1 \leq f \leq 2N$) les composantes de Fourier obtenues par transformation des blocs k du signal de réception x(n) et du signal d'erreur e(n). Pour une fréquence d'échantillonnage de 8 kHz, des tailles de segments et de blocs typiques pour le filtrage dans le domaine fréquentiel sont S=32, 2N=256.

Les composantes de Fourier produites par les unités 16, 17 sont fournies aux moyens 9 de contrôle d'adaptation qui, dans l'exemple illustré par la figure 2, consistent en 2N modules indépendants 9.f ($1 \leq f \leq 2N$) recevant chacun les composantes correspondantes $X_k(f)$ et $E_k(f)$ et produisant respectivement les 2N coefficients complexes servant au filtrage dans le domaine fréquentiel. Le filtre 7 se compose de 2N multiplieurs complexes 7.f recevant chacun une composante de Fourier $X_k(f)$ et le coefficient correspondant délivré par le module 9.f de contrôle d'adaptation, et délivrant une composante de Fourier $Y_k(f)$. En pratique, compte tenu des propriétés de symétrie de la transformée de Fourier, on peut obtenir les 2N composantes $Y_k(f)$ au moyen de N+1 multiplieurs seulement. Une unité 21 assure une transformée de Fourier rapide inverse (TFRI) du bloc de 2N composantes $Y_k(f)$. A partir des blocs de 2N échantillons délivrés par l'unité 21, une unité 22 construit segment par segment le signal de prédiction d'écho y(n). L'unité 22 extrait les N derniers échantillons de chaque bloc reçu de l'unité 21 et, lorsque S<N, assure en outre les additions à recouvrement nécessaires à la reconstitution des segments successifs du signal filtré y(n).

Comme il est bien connu, les transformées de Fourier rapides peuvent être remplacées par des transformées de Hartley rapides, qui conduisent à des composantes spectrales directement liées aux composantes de Fourier (voir T.W. Wong et al : "Adaptive Filtering Using Hartley Transform and Overlap-Save Method", IEEE Trans. on Signal Processing, Vol.39, N°7, juillet 1991, pages 1708-1711).

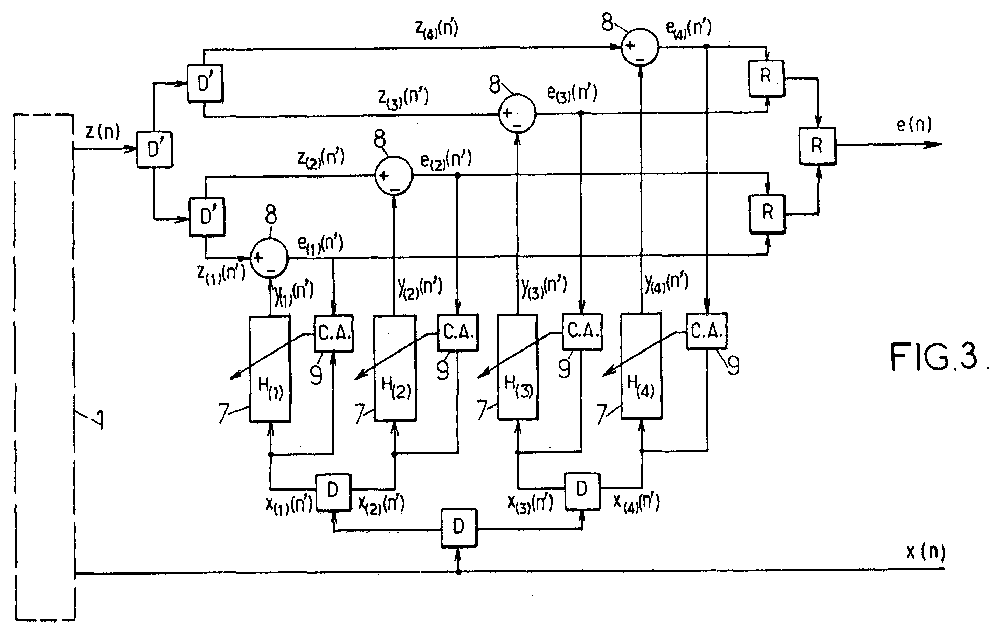

La figure 3 montre une autre forme de réalisation possible d'un annuleur d'écho adaptatif, faisant appel à une décomposition en sous-bandes. On considère à titre d'exemple le cas où sont prévues quatre sous-bandes. On note $x_{(i)}(n')$, $y_{(i)}(n')$, $z_{(i)}(n')$ et $e_{(i)}(n')$ les composantes relatives à la sous-bande i ($1 \leq i \leq 4$) des signaux x(n), y(n), z(n) et e(n).

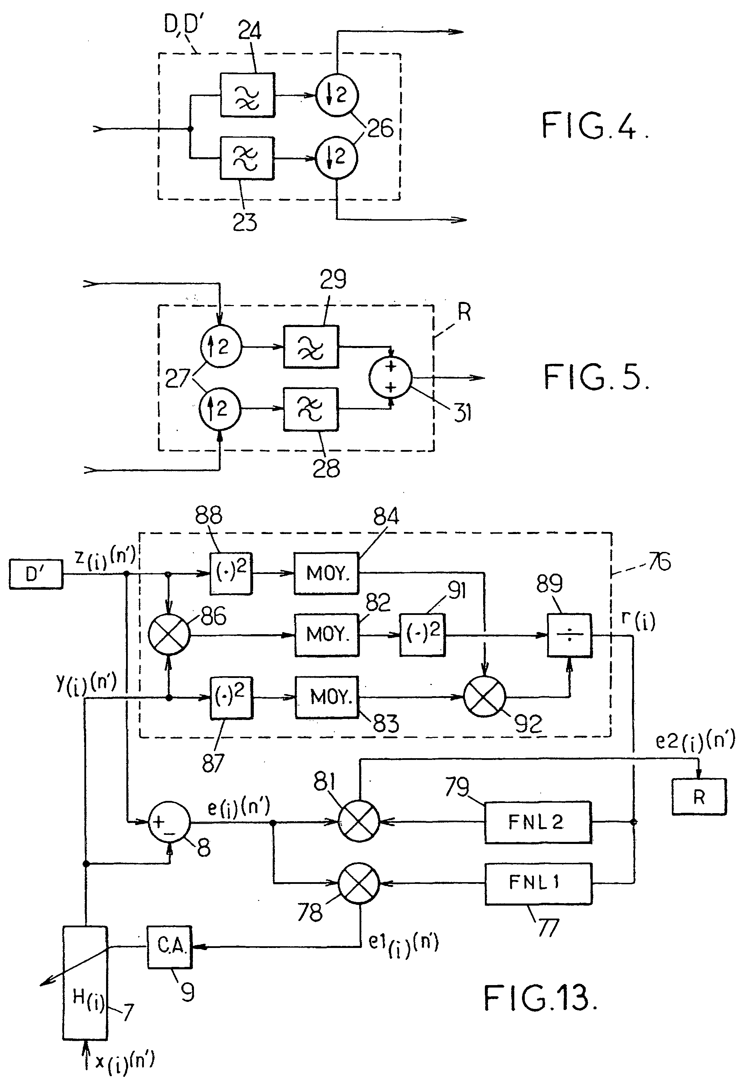

Les signaux $x_{(i)}(n')$ et $z_{(i)}(n')$ sont obtenus en décomposant les signaux x(n) et z(n) au moyen de deux étages de décomposition, le premier étage comprenant un module D, D' à une entrée et deux sorties du type représenté sur la figure 4, et le second étage comprenant deux modules D, D' du même type dont les entrées sont respectivement reliées aux deux sorties du module du premier étage. Chaque module D ou D' comprend un filtre passe-bas 23 et un filtre passe-haut 24 recevant tous deux le signal d'entrée du module et deux circuits 26 qui sous-échantillonnent dans un facteur 2 les signaux de sortie des filtres 23, 24, pour produire les deux signaux de sortie du module D, D'.

L'annuleur d'écho en sous-bandes comporte un filtre adaptatif 7 pour chaque sous-bande, qui filtre dans le domaine temporel la composante correspondante $x_{(i)}(n')$ du signal de réception pour produire la composante $y_{(i)}(n')$ du signal de prédiction d'écho qui est soustraite par un soustracteur 8 de la composante $z_{(i)}(n')$ du signal d'observation. Pour chaque sous-bande, un module 9 contrôle l'adaptation du filtre 7.

Des moyens de recombinaison en deux étages construisent le signal d'erreur e(n) à partir des quatre composantes $e_{(i)}(n')$ délivrées par les soustracteurs 8. Le premier étage comprend deux modules R à deux entrées et une sortie du type représenté sur la figure 5, et le second étage comprend un seul module R du même type dont les deux entrées sont reliées aux sorties des deux modules du premier étage. Chaque module R comprend deux circuits 27 de suréchantillonnage dans un facteur 2 des deux signaux d'entrée du module, un filtre passe-bas 28 et un filtre passe-haut 29 recevant respectivement les deux signaux suréchantillonnés produits par les circuits 27, et un sommateur 31 qui additionne les signaux de sortie des deux filtres 28, 29 pour produire le signal de sortie du module R.

On connaît diverses formes classiques pour les filtres de décomposition et de recombinaison 23, 24, 28, 29 qui peuvent généralement être à réponse impulsionnelle finie ou infinie, par exemple des filtres conjugués en quadrature (CQF), des filtres miroirs en quadrature (QMF), ou encore des filtres à décomposition en ondelettes (WDF). D'autre part, on peut utiliser, plutôt que la structure en plusieurs étages, une structure à décomposition directe de type banc de filtres modulés en cosinus (voir H.S. Malvar : "Extended Lapped Transforms : Properties, Applications, and Fast Algorithms", IEEE Trans. on Signal Processing, Vol.40, N°11, novembre 1992, pages 2703-2714, ou P.P. Vaidyanathan : "Multirate Digital Filters, Filter Banks, Polyphase Networks and Applications : A Tutorial", Proc. of the IEEE, Vol.78, N°1, janvier 1990, pages 56-93).

Les algorithmes d'adaptation mis en oeuvre par les modules 9 de l'annuleur d'écho en sous-bandes peuvent être du même type que ceux couramment utilisés pour adapter le filtrage temporel en pleine bande. Il existe néanmoins des algorithmes particulièrement bien adaptés à la structure en sous-bandes, tels que l'algorithme rapide des moindres carrés récursifs (RLS) à décomposition QR (cf. F. CAPMAN et al : "Acoustic echo cancellation using a fast-QR-RLS algorithm and multirate schemes", IEEE ICASSP'95, Detroit, 1995 ; ou la demande internationale de brevet WO96/21313). Il est également possible d'utiliser des paramètres de convergence et/ou des algorithmes d'adaptation différents d'une sous-bande à une autre. On peut notamment utiliser dans les sous-bandes relatives aux fréquences les plus basses un algorithme (tel que le QR-RLS rapide) plus efficace que dans les sous-bandes supérieures, où on peut utiliser un algorithme moins exigeant en termes de ressources de calcul (tel qu'un NLMS).

Dans certains annuleurs d'écho, les coefficients du filtrage de prédiction d'écho sont figés lors du fonctionnement. Ces coefficients peuvent être fixes ; ils sont alors déterminés une fois pour toutes de manière à prendre en compte, par exemple, les réponses du haut-parleur 3 et du microphone 4, les couplages directs entre le haut-parleur et le microphone, et éventuellement les couplages indirects si le haut-parleur et le microphone restent toujours dans les mêmes positions. Les coefficients peuvent encore être déterminés par apprentissage, soit à la mise en marche de l'annuleur d'écho soit périodiquement, en faisant converger un algorithme d'adaptation sur un signal superposé ou substitué au signal de réception et ayant des propriétés de décorrélation analogues à celles d'un bruit blanc.

On connaît également des annuleurs d'écho dans lesquels il y a plusieurs filtres de prédiction d'écho, le signal émis vers le canal de communication étant obtenu en sélectionnant l'un des filtres selon des critères prédéfinis tels qu'une minimisation de l'énergie du signal d'erreur, ou encore en combinant les sorties de plusieurs filtres de prédiction d'écho (voir W. Armbruster : "Wideband Acoustic Echo Canceller with Two Filter Structure", Signal Processing VI : Theories and Applications, 1992, pages 1611-1614, ou J.S. Soo et al : "A Multistep Size (MSS) Frequency Domain Adaptive Filter", IEEE Trans. on Signal Processing, Vol.39, n°1, janvier 1991, pages 115-121). L'annuleur d'écho peut par exemple comporter un ou plusieurs filtres adaptatifs fonctionnant avec des paramètres de convergence différents ou selon des algorithmes d'adaptation différents, et/ou un ou plusieurs filtres à coefficients fixes, et/ou un ou plusieurs filtres dont les coefficients sont déterminés par apprentissage.

Un but principal de la présente invention est d'améliorer la convergence et/ou la qualité du signal de sortie d'un annuleur d'écho, notamment d'un annuleur d'écho faisant intervenir une certaine résolution spectrale (filtrage dans le domaine fréquentiel ou en sous-bandes).

L'invention propose ainsi un procédé d'annulation d'écho, dans lequel on applique un signal de réception en entrée d'un système générateur d'écho, on recueille un signal d'observation en sortie dudit système, on filtre le signal de réception pour produire au moins un signal de prédiction d'un écho du signal de réception dans le signal d'observation, et on soustrait un signal de prédiction d'écho du signal d'observation pour produire un signal d'erreur. Selon l'invention, on décompose le signal d'observation en M composantes spectrales se rapportant à des fréquences différentes du spectre, M désignant un nombre entier plus grand que 1, on obtient M composantes spectrales correspondantes d'un signal de prédiction d'écho, on calcule M grandeurs à partir des composantes spectrales du signal d'observation et du signal de prédiction d'écho, chacune desdites M grandeurs ayant une valeur à variation progressive représentative d'un degré de similitude entre, respectivement, l'une des M composantes spectrales du signal d'observation et la composante spectrale correspondante du signal de prédiction d'écho, et on opère au moins une mise en forme spectrale du signal d'erreur en fonction desdites M grandeurs calculées.

Les M grandeurs permettent de disposer d'information relative à la présence d'interférences (bruit ambiant ou parole locale) dans le signal d'observation, cette information étant sélective en fréquence et à variation progressive, ce qui assure une richesse d'information et une précision sensiblement plus importantes que les détecteurs de double parole classiques qui sont essentiellement à décision binaire et sur toute la bande spectrale.

Lorsqu'on adapte le filtrage du signal de réception en fonction du signal de réception et du signal d'erreur, la mise en forme spectrale du signal d'erreur peut servir à produire un signal d'erreur filtré utilisé pour l'adaptation du filtrage du signal de réception. La mise en forme consiste alors à atténuer, de préférence de façon non linéaire, les composantes spectrales du signal d'erreur pour lesquelles la grandeur calculée traduit une similitude relativement faible entre les composantes spectrales correspondantes du signal d'observation et du signal de prédiction d'écho.

La mise en forme spectrale du signal d'erreur peut également servir à produire un signal d'erreur post-filtré que l'annuleur d'écho émet vers le canal de communication. Dans ce cas, le post-filtrage tend plutôt à atténuer, de préférence de façon non linéaire, les composantes du signal d'erreur pour lesquelles la grandeur calculée montre une similitude relativement importante entre les composantes correspondantes des signaux y(n) et z(n).

Contrairement à la pratique habituelle dans le domaine des détecteurs de double parole, ce sont les composantes spectrales du signal de prédiction d'écho et non celles du signal de réception qui sont comparées aux composantes correspondantes du signal d'observation pour quantifier le degré de similitude entre ces composantes. Ainsi, les aspects temporels des trajets d'écho sont déjà pris en compte par le filtrage opéré sur le signal de réception.

On note que si l'annuleur d'écho est pourvu de plusieurs filtres de prédiction d'écho, il est concevable que le signal de prédiction d'écho sur la base duquel sont calculées les M grandeurs représentant les degrés de similitude ne soit pas le même que celui qui est soustrait du signal d'observation pour produire le signal d'erreur soumis à la mise en forme spectrale (filtrage et/ou post-filtrage). On peut notamment prévoir qu'un filtre à coefficients fixes soit employé spécialement pour produire le signal de prédiction d'écho servant au calcul des M grandeurs de similitude.

Lorsque les M composantes spectrales du signal d'observation et du signal de prédiction d'écho sont des composantes de Fourier de ces signaux, il est avantageux que la grandeur représentative du degré de similitude entre deux composantes de Fourier correspondantes du signal d'observation et du signal de prédiction d'écho soit une valeur d'une fonction de cohérence entre ces composantes de Fourier. Cette disposition pourra avantageusement être retenue dans un annuleur d'écho à filtrage dans le domaine fréquentiel, puisque des calculs de transformées de Fourier ou de Hartley sont de toute façon nécessaires dans ce cas. Ces dispositions sont également applicables dans le cas d'un filtrage dans le domaine temporel.

L'utilisation de la fonction de cohérence a déjà été proposée dans des détecteurs de double parole (cf. T. GÄNSLER et al : "A double-talk detector based on coherence", Proc. of the International Conference on Signal Processing Applications and Technology, Boston, Octobre 1995, pages 332-336). Outre le contexte d'application différent, on peut noter que ces auteurs calculent la cohérence entre le signal d'observation et le signal de réception, et donc ne corrigent pas le canal acoustique, et que les décisions prises en relation avec les cohérences calculées sont de nature binaire.

En variante, il est possible de remplacer la fonction de cohérence par une fonction décroissante de la valeur absolue de l'angle formé, dans le plan complexe, entre lés composantes de Fourier correspondantes du signal d'observation et du signal de prédiction d'écho. Cette fonction décroissante peut notamment être le cosinus, ou le cosinus carré, de l'angle borné à $\pm\pi/2$. On peut montrer que ce cosinus est directement lié à la fonction de cohérence. L'avantage de cette formulation est que le cosinus, ou son carré, peut être calculé simplement sans avoir besoin d'une mémoire nécessaire aux calculs de moyennes utilisés pour obtenir les valeurs de la fonction de cohérence. La mesure reflète ainsi plus rapidement les variations des signaux.

Dans le cas d'un annuleur d'écho en sous-bandes, les M composantes spectrales du signal d'observation sont obtenues par une décomposition en M sous-bandes du signal d'observation, la même décomposition en sous-bandes est effectuée sur le signal de réception pour produire M composantes spectrales correspondantes du signal de réception, le signal de prédiction d'écho est produit sous la forme de ses M composantes spectrales respectivement délivrées par M filtres adaptatifs auxquels sont respectivement appliquées les M composantes spectrales du signal de réception, et le signal d'erreur est produit sous la forme de M composantes spectrales correspondantes dont chacune est obtenue en soustrayant une composante spectrale du signal de prédiction d'écho d'une composante spectrale correspondante du signal d'observation. Dans ce cas, la grandeur représentative du degré de similitude entre deux composantes spectrales correspondantes du signal d'observation et du signal de prédiction d'écho est avantageusement une valeur d'une fonction d'intercorrélation normalisée entre ces composantes spectrales.

D'autres particularités et avantages de la présente invention apparaîtront dans la description ci-après d'exemples de réalisation non limitatifs, en référence aux dessins annexés, dans lesquels :

- la figure 1, précédemment commentée, est un schéma de principe d'un annuleur d'écho adaptatif à filtrage en pleine bande dans le domaine temporel ;
- la figure 2, précédemment commentée, est un schéma de principe d'un annuleur d'écho adaptatif à filtrage dans le domaine fréquentiel ;
- la figure 3, précédemment commentée, est un schéma de principe d'un annuleur d'écho adaptatif à filtrage en sous-bandes ;
- la figure 4 et 5, précédemment commentées, sont des schémas synoptiques de moyens de décomposition et de recombinaison de l'annuleur d'écho de la figure 3 ;
- la figure 6 est un schéma de principe d'un annuleur d'écho adaptatif selon la présente invention ;
- la figure 7 est un schéma synoptique d'une unité de calcul de cohérence de l'annuleur d'écho de la figure 6 ;
- la figure 8 est un schéma synoptique de moyens de filtrage du signal d'erreur dans un annuleur d'écho selon la figure 6 ;
- les figures 9 et 10 sont des graphiques illustrant des formes possibles de fonctions non linéaires utilisables pour mettre en oeuvre l'invention ;

- les figures 11 et 12 sont des schémas de variantes de réalisation des moyens de filtrage de la figure 8 ; et
- la figure 13 est un schéma synoptique de moyens permettant la mise en oeuvre de la présente invention dans un annuleur d'écho adaptatif à filtrage en sous-bandes.

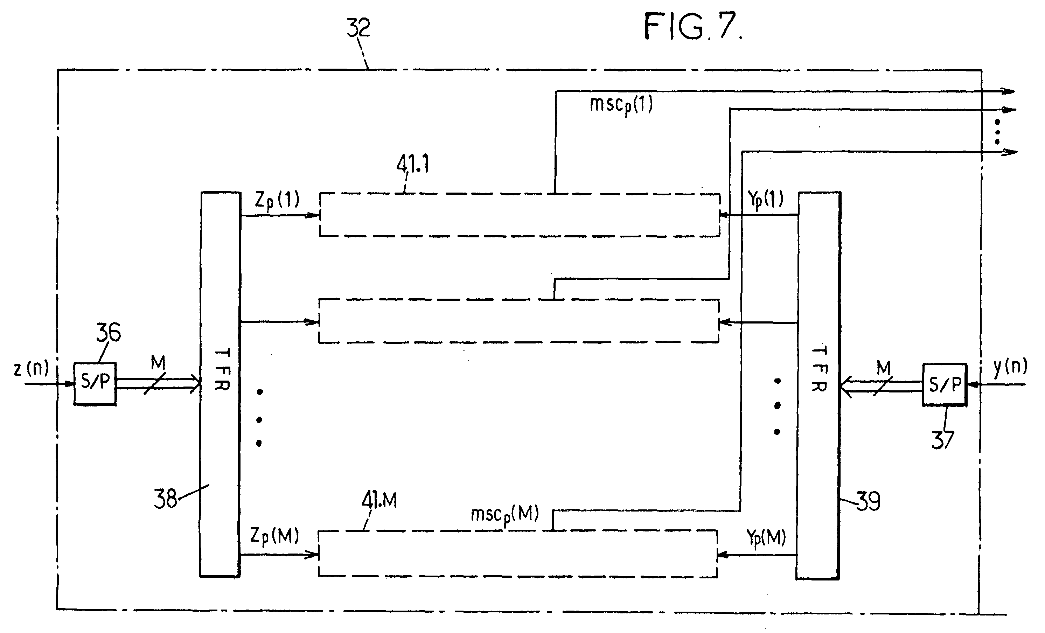

La figure 6 reprend le schéma de principe de l'annuleur d'écho de la figure 1, en y ajoutant trois modules 32, 33, 34 servant à la mise en oeuvre de la présente invention. Le module 32 calcule M grandeurs qui, avec une certaine résolution spectrale, caractérisent un degré de similitude entre le signal d'observation z(n) et le signal de prédiction d'écho y(n). Le module 33 est un filtre qui, sur la base de ces M grandeurs, opère une mise en forme spectrale du signal d'erreur e(n), et fournit le signal ainsi mis en forme e1(n) au module de contrôle d'adaptation 9. Le module 34 est un post-filtre qui opère une autre mise en forme spectrale du signal d'erreur e(n) sur la base des M grandeurs pour émettre le signal ainsi post-filtré e2(n) vers le canal de communication auquel est relié l'annuleur d'écho.

Bien que le schéma de la figure 6 ait été établi dans le cas où, selon la figure 1, l'annulation d'écho repose sur un filtrage en pleine bande dans le domaine temporel, on comprendra que l'adjonction de trois modules tels que 32, 33, 34 permet de façon générale de mettre en oeuvre l'invention dans tout type d'annuleur d'écho.

Dans le cas de la figure 6, les M grandeurs calculées par le module 32 sont des valeurs d'une fonction de cohérence entre des composantes de Fourier du signal d'observation z(n) et des composantes de Fourier correspondantes du signal de prédiction d'écho y(n). Le module 32 peut alors avoir la constitution représentée sur la figure 7.

Dans le module 32 de la figure 7, des convertisseurs série-parallèle 36, 37 reçoivent respectivement les signaux z(n) et y(n), et les mettent sous forme de blocs successifs de M échantillons. Ces blocs peuvent généralement être recouvrants ou non-recouvrants. Les transformées de Fourier des signaux y(n) et z(n) sont réalisées sur ces blocs de longueur M échantillons par des unités 38, 39 mettant en oeuvre un algorithme conventionnel de TFR. On note $Z_p(m)$ et $Y_p(m)$ les m-ièmes composantes de Fourier délivrées par les unités 38 et 39 relativement au bloc de rang p du signal d'observation z(n) et du signal de prédiction d'écho y(n) ($1 \leq m \leq M$).

Pour chaque index fréquentiel m, les composantes de Fourier $Z_p(m)$ et $Y_p(m)$ sont fournies à une unité associée 41.m qui se charge de calculer la valeur correspondante de la fonction de cohérence $msc_p(m)$. Ces unités 41.m ont toutes la même constitution. Dans l'exemple considéré, la fonction de cohérence employée est le module carré de la cohérence ("magnitude squared- coherence"), qui s'exprime par :

$$msc_p(m) = \frac{|\gamma_p^{YZ}(m)|^2}{\gamma_p^{YY}(m) . \gamma_p^{ZZ}(m)} \qquad (1)$$

où $\gamma_p^{YY}(m)$ et $\gamma_p^{ZZ}(m)$ désignent les densités spectrales de puissance, estimées au moment du bloc p pour la m-ième fréquence, des signaux y(n) et z(n), et $\gamma_p^{YZ}(m)$ désigne la densité spectrale croisée de ces deux signaux estimée au moment du bloc p pour la m-ième fréquence. Ces densités spectrales de puissance peuvent être calculées simplement par le module 41.m à l'aide d'un facteur d'oubli $\lambda$ tel que $0 << \lambda < 1$, de la manière suivante

$$\gamma_p^{YY}(m) = = \lambda . \gamma_{p-1}^{YY}(m) + (1-\lambda) . |Y_p(m)|^2 \qquad (2)$$

$$\gamma_p^{ZZ}(m) = \lambda . \gamma_{p-1}^{ZZ}(m) + (1-\lambda) . |Z_p(m)|^2 \qquad (3)$$

$$\gamma_p^{YZ}(m) = \lambda . \gamma_{p-1}^{YZ}(m) + (1-\lambda) . Y_p(m)[Z_p(m)]^* \qquad (4)$$

où $|.|^2$ désigne le module carré et $(.)^*$ le conjugué d'un nombre complexe.

Pour chaque indice de composante spectrale m, la grandeur $msc_p(m)$ présente une variation progressive, croissant entre 0 et 1, en fonction du degré de similitude entre les composantes de Fourier $Z_p(m)$ et $Y_p(m)$. Cette grandeur est mise à jour à chaque nouveau bloc de M échantillons.

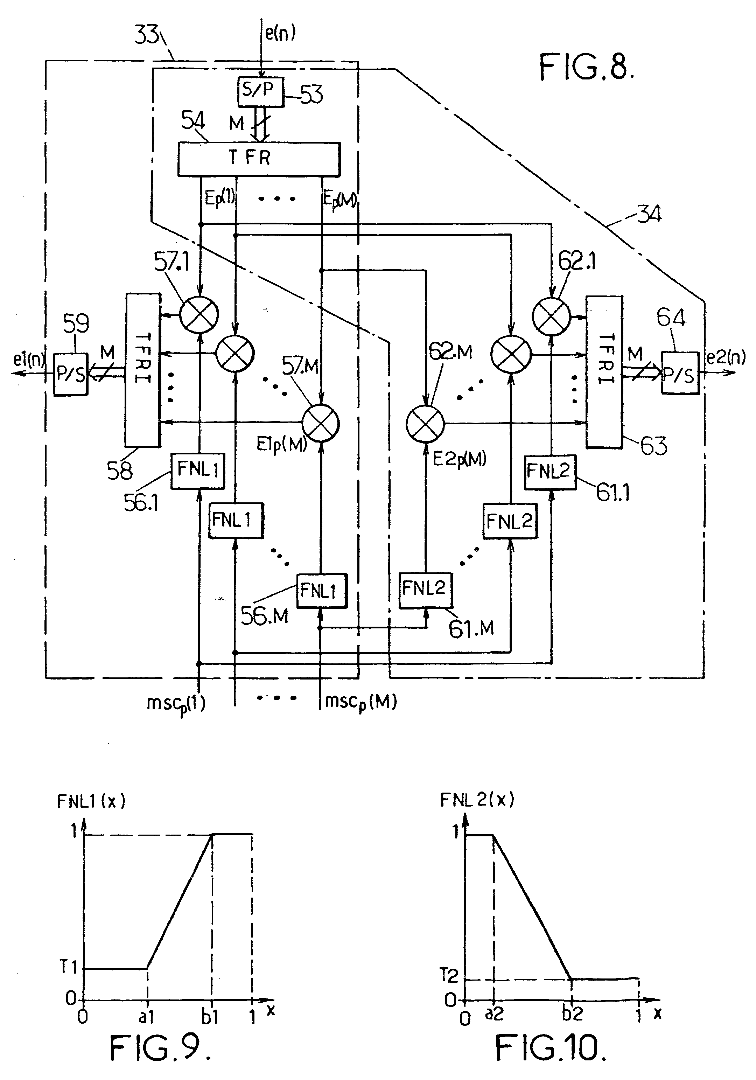

La figure 8 montre un schéma synoptique du filtre 33 et du post-filtre 34 qui traitent le signal d'erreur e(n). Ces traitements sont ici effectués dans le domaine fréquentiel, les filtres 33 et 34 partageant les circuits produisant les composantes de Fourier $E_p(m)$ du signal d'erreur e(n). Ces circuits comprennent un convertisseur série-parallèle 53 produisant des blocs de M échantillons du signal d'erreur e(n) de la même manière que les convertisseurs 36, 37 de la figure 7, et une unité de calcul de TFR 54.

Le filtre 33 comporte M circuits 56.m ($1 \leq m \leq M$) calculant chacun, pour une valeur respective $msc_p(m)$ de la

fonction de cohérence, la valeur prise par une fonction non linéaire croissante FNL1. La fonction non linéaire FNL1 a par exemple la forme représentée sur la figure 9, définie par trois paramètres a1, b1 et T1 tels que 0<a1<b1<1 et 0<T1<1 : la fonction FNL1(x) vaut T1 pour $0 \leq x \leq a1$, elle croît de T1 à 1 quant x croît de a1 à b1, et elle vaut 1 pour $b1 \leq x \leq 1$. Le jeu de paramètres T1, a1, b1 peut être identique pour chacune des M composantes de Fourier, ou il peut être différent d'une composante de Fourier à une autre. Les valeurs retenues pour ces paramètres peuvent être déterminées expérimentalement ou par simulation en fonction de l'application particulière et des caractéristiques du terminal équipé de l'annuleur d'écho. Chaque valeur FNL1(msc$_p$(m)) produite par un circuit 56.m est fournie à un multiplieur respectif 57.m recevant par ailleurs la composante de Fourier correspondante E$_p$(m) du signal d'erreur. Les valeurs E1$_p$(m) délivrées par les M multiplieurs 57.m sont fournies à une unité 58 de calcul de TFRI qui obtient leur transformée de Fourier inverse sous la forme d'un bloc de M échantillons. Un convertisseur parallèle-série 59 forme le signal d'erreur filtré e1(n) sur la base des blocs délivrés par l'unité 58.

Ce signal e1(n) est exploité par le module de contrôle d'adaptation 9 de la même manière que le signal e(n) dans le cas classique de la figure 1. L'adaptation du filtre 7 peut être réalisé selon tout algorithme approprié.

Le post-filtre 34 comporte M circuits 61.m ($1 \leq m \leq M$) calculant chacun, pour une valeur respective msc$_p$(m) de la fonction de cohérence, la valeur prise par une fonction non linéaire décroissante FNL2. La fonction non linéaire FNL2 a par exemple la forme représentée sur la figure 10, définie par trois paramètres a2, b2 et T2 tels que 0<a2<b2<1 et 0<T2<1 : la fonction FNL2(x) vaut 1 pour $0 \leq x \leq a2$, elle décroît de 1 à T2 quant x croît de a2 à b2, et elle vaut T2 pour $b2 \leq x \leq 1$. Le jeu de paramètres T2, a2, b2 peut être identique pour chacune des M composantes de Fourier, ou il peut être différent d'une composante de Fourier à une autre. Les valeurs retenues pour ces paramètres peuvent être déterminées expérimentalement ou par simulation. Chaque valeur FNL2(msc$_p$(m)) produite par un circuit 61.m est fournie à un multiplieur respectif 62.m recevant par ailleurs la composante de Fourier correspondante E$_p$(m) du signal d'erreur. Les valeurs E2$_p$(m) délivrées par les M multiplieurs 62.m sont fournies à une unité 63 de calcul de TFRI qui obtient leur transformée de Fourier inverse sous la forme d'un bloc de M échantillons. Un convertisseur parallèle-série 64 forme le signal d'erreur post-filtré e2(n) sur la base des blocs délivrés par l'unité 63.

Lorsqu'il est prévu des modules tels que 32, 33, 34 (figure 6) dans le cadre d'un annuleur d'écho fonctionnant par filtrage dans le domaine fréquentiel, il est à noter que la résolution spectrale utilisée pour les calculs de cohérence peut être égale ou inférieure à la résolution spectrale du filtre de modélisation des échos. En d'autres termes, avec les notations de la figure 2, on peut avoir M=2N ou M<2N. D'autre part, la cadence de mise à jour des calculs de cohérence, qui correspond à la cadence de renouvellement des blocs p de M échantillons sur la figure 7, peut être différente de la cadence de renouvellement des blocs k de 2N échantillons sur la figure 2.

En outre, il est possible de subdiviser le spectre des signaux en Q sous-bandes (Q>1) pour les filtrages du signal d'erreur. Les valeurs de la fonction de cohérence pour les composantes fréquentielles relevant d'une sous-bande donnée sont alors moyennées, et c'est la valeur moyenne ainsi obtenue qui est soumise aux fonctions non-linéaires FNL1 et FNL2. La valeur d'une fonction non-linéaire pour une sous-bande donnée sert alors à pondérer chacune des composantes de Fourier du signal d'erreur qui relèvent de cette sous-bande.

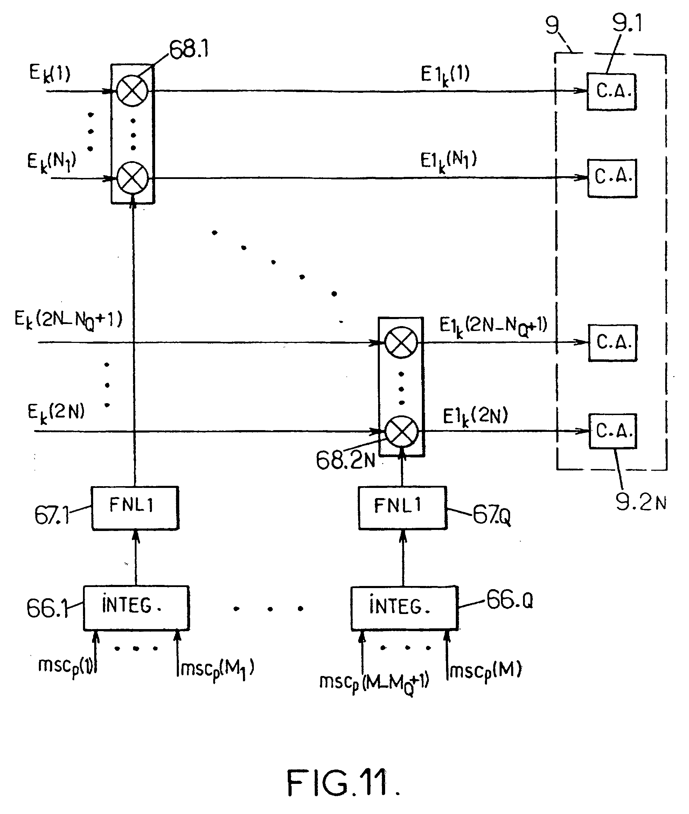

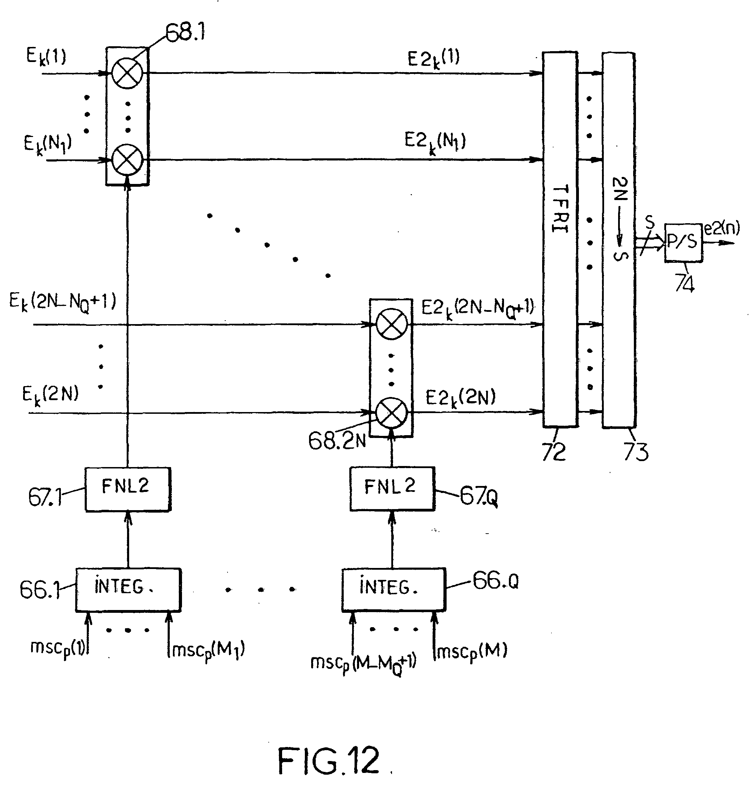

Les figures 11 et 12 montrent de telles implémentations pour le filtre et le post-filtre du signal d'erreur dans le cas d'un annuleur d'écho travaillant dans le domaine fréquentiel conformément à la figure 2, les valeurs de la fonction de cohérence msc$_p$(m) ($1 \leq m \leq M$ avec $M \leq 2N$) étant obtenues par un module 32 conforme à celui représenté sur la figure 7. On suppose que la q-ième sous-bande ($1 \leq q \leq Q$) couvre M$_q$ composantes de Fourier des signaux z(n) et y(n) pour lesquelles le module 32 a calculé les valeurs de la fonction de cohérence, et couvre N$_q$ composantes de Fourier du signal d'erreur calculées par l'unité de TFR 17. La subdivision en Q sous-bandes peut être uniforme (M$_1$=M$_2$=... =M$_Q$ et N$_1$=N$_2$=... =N$_Q$) ou non uniforme, par exemple selon une échelle de Bark telle qu'utilisée dans le domaine de la psycho-acoustique.

Le filtre du signal d'erreur représenté sur la figure 11 comprend Q circuits d'intégration 66$_q$ ($1 \leq q \leq Q$) qui calculent chacun la moyenne arithmétique des M$_q$ valeurs de la fonction de cohérence relatives à la sous-bande q, et Q circuits 67.q qui calculent, pour les moyennes délivrées par les circuits d'intégration 66.q, les valeurs prises par la fonction non-linéaire croissante FNL1 qui peut être identique ou différente pour chaque sous-bande. Le filtre comprend en outre 2N multiplieurs 68.f ($1 \leq f \leq 2N$) recevant chacun une composante de Fourier respective E$_k$(f) du signal d'erreur ainsi que la valeur délivrée par le circuit 67.q, où q désigne la sous-bande dont relève la composante de Fourier f du signal d'erreur. Dans le cas de la figure 11, le signal d'erreur filtré e1(n) n'est pas produit explicitement dans le domaine temporel, mais sous la forme de ses 2N composantes de Fourier E1$_k$(f) qui sont les composantes de Fourier pondérées du signal d'erreur respectivement délivrées par les multiplieurs 68.f. Ces composantes E1$_k$(f) sont respectivement fournies en tant que signal d'erreur filtré aux 2N modules de contrôle d'adaptation 9.f qui sont du même type que ceux représentés sur la figure 2.

Les Q circuits d'intégration 66.q font également partie du post-filtre du signal d'erreur représenté sur la figure 12, qui comprend également Q circuits 69.q qui calculent, pour les moyennes délivrées par les circuits d'intégration 66.q, les valeurs prises par la fonction non-linéaire décroissante FNL2 qui peut être identique ou différente pour chaque sous-bande. Le post-filtre comprend en outre 2N multiplieurs 71.f ($1 \leq f \leq 2N$) recevant chacun une composante de Fourier

respective $E_k(f)$ du signal d'erreur ainsi que la valeur délivrée par le circuit 69.q, où q désigne la sous-bande dont relève la composante de Fourier f du signal d'erreur. Les composantes de Fourier pondérées $E2_k(f)$ respectivement délivrées par les multiplieurs 68.f sont fournies à une unité 72 de calcul de TFRI produisant des blocs de 2N échantillons. A partir de ces blocs, une unité 73 semblable à l'unité 22 de la figure 2 construit segment par segment le signal d'erreur post-filtré e2(n) qu'un convertisseur parallèle-série 74 remet sous forme séquentielle.

Comme il a été indiqué plus haut, une variante avantageuse de l'invention consiste à remplacer la fonction de cohérence entre les composantes $Z_p(m)$ et $Y_p(m)$ par une fonction décroissante de l'angle $\varphi_p(m)$ formé, dans le plan complexe, entre les nombres complexes $Z_p(m)$ et $Y_p(m)$ qui, dans le cas illustré par la figure 7 sont produits par les unités de TFR 38 et 39. En d'autres termes, l'angle $\varphi_p(m)$ est l'argument du nombre complexe $Z_p(m)/Y_p(m)$. Si on note a et a' les parties réelles respectives de $Z_p(m)$ et $Y_p(m)$, et b et b' leurs parties imaginaires, alors :

$$\cos\varphi_p(m) = \frac{aa' + bb'}{\sqrt{(a^2+b^2)(a'^2+b'^2)}}$$

Ce cosinus de l'angle $\varphi_p(m)$, borné entre $-\pi/2$ et $+\pi/2$ (car un déphasage de $\pi$ dénote une présence d'interférences étant donné qu'une compensation du canal acoustique est déjà opérée dans le signal y(n) par le filtre 7), est une autre mesure normalisée du degré de similitude entre les composantes $Z_p(m)$ et $Y_p(m)$, qui présente l'avantage de pouvoir être calculée aisément bloc par bloc sans avoir à mémoriser des quantités pour réaliser des moyennages (selon les relations (2) à (4)). En pratique, on pourra calculer le carré $\alpha_p(m)$ de $\cos\varphi_p(m)$ pour éviter le calcul de racine carrée qui pourra être pris en compte dans la définition des fonctions non linéaires FNL1 et FNL2.

Dans cette variante, les unités 41.m de la figure 7 sont agencées pour délivrer $\alpha_p(m)=0$ si aa'+ bb'≤0, et $\alpha_p(m)=(aa' + bb')^2/[(a^2+ b^2)(a'^2+ b'^2)]$ sinon. Ces grandeurs $\alpha_p(m)$ peuvent être traitées de façon semblable aux $msc_p(m)$ par des filtres et post-filtres tels que ceux schématisés sur les figures 9 à 12.

Dans le cas d'un annuleur d'écho en sous-bandes, la résolution spectrale dont on a besoin selon l'invention ne résulte pas d'une transformée de Fourier, mais d'une décomposition en M sous-bandes. Les M grandeurs servant à quantifier de manière progressive la similitude entre les signaux z(n) et y(n) peuvent alors être les valeurs prises par une fonction d'intercorrélation normalisée entre les composantes spectrales $z_{(i)}(n')$ et $y_{(i)}(n')$ (figure 3), telle que :

$$r_{(i)} = \frac{E[y_{(i)}(n').z_{(i)}(n')]^2}{E[y_{(i)}^2(n')].E[z_{(i)}^2(n')]} \tag{5}$$

où E[.] désigne l'espérance mathématique. Les espérances mathématiques de la relation (5) peuvent être calculées par moyennage exact sur une fenêtre d'analyse, auquel cas les $r_{(i)}$ sont mis à jour à chaque nouvelle fenêtre, ou au moyen d'un facteur d'oubli de façon semblable aux relations (2) à (4), auquel cas les $r_{(i)}$ peuvent être mis à jour à chaque temps de sous-échantillonnage. La valeur de $r_{(i)}$ croît progressivement de 0 à 1 selon le degré de similitude entre les signaux $z_{(i)}(n')$ et $y_{(i)}(n')$.

Chaque voie de traitement d'une sous-bande i peut alors être complétée par les moyens représentés sur la figure 13, qui comprennent :

- une unité 76 calculant la valeur $r_{(i)}$ de la fonction d'intercorrélation normalisée pour les composantes $z_{(i)}(n')$ et $y_{(i)}(n')$ fournies respectivement par les moyens de décomposition D' et par le filtre 7 relatif à la sous-bande i ;
- un circuit 77 calculant pour la valeur de $r_{(i)}$ la valeur prise par une fonction non linéaire croissante FNL1 qui peut être du même type que celle représentée graphiquement sur la figure 9 et qui peut être différente d'une sous-bande à une autre ;
- un multiplieur 78 qui pondère la composante spectrale $e_{(i)}(n')$ du signal d'erreur délivrée par le soustracteur 8 par la valeur fournie par le circuit 77, et qui fournit la composante pondérée $e1_{(i)}(n')$ au module de contrôle d'adaptation 9 relatif à la sous-bande i ;
- un circuit 79 calculant pour la valeur de $r_{(i)}$ la valeur prise par une fonction non linéaire décroissante FNL2 qui peut être du même type que celle représentée graphiquement sur la figure 10 et qui peut être différente d'une sous-bande à une autre ; et
- un multiplieur 81 qui pondère la composante spectrale $e_{(i)}(n')$ du signal d'erreur délivrée par le soustracteur 8 par la valeur fournie par le circuit 79, et qui fournit la composante pondérée $e2_{(i)}(n')$ au module R approprié des moyens de recombinaison.

Les M circuits 77 et les M multiplieurs 78 relatifs aux différentes sous-bandes constituent, de façon semblable au filtre 33 de la figure 6, le filtre qui opère la mise en forme spectrale du signal d'erreur en fonction des M grandeurs

$r_{(i)}$ pour l'adaptation du filtrage du signal de réception x(n).

Les M circuits 79, les M multiplieurs 81 et les modules R de recombinaison constituent, de façon semblable au post-filtre 34 de la figure 6, le post-filtre qui opère la mise en forme spectrale du signal d'erreur en fonction des M grandeurs $r_{(i)}$ pour la production du signal de sortie de l'annuleur d'écho.

Pour le calcul des espérances mathématiques de la relation (5), l'unité 76 peut comprendre trois circuits de moyennage 82, 83, 84 recevant respectivement les valeurs successives de $y_{(i)}(n')$. $z_{(i)}(n')$, de $y^2_{(i)}(n')$ et de $z^2_{(i)}(n')$ d'un multiplieur 86 et de deux circuits de mise au carré 87, 88. Le quotient de la relation (5) est calculé par un diviseur 89 recevant le numérateur d'un circuit de mise au carré 91 et le dénominateur d'un multiplieur 92.

Dans la description ci-dessus et les dessins annexés, on a présenté des modes de réalisation de l'invention à partir d'agencements matériels de modules, d'unités ou de circuits individualisés, afin de rendre l'explication aussi claire que possible. L'homme du métier appréciera que l'invention peut également être mise en oeuvre différemment, notamment en programmant un processeur de signal numérique approprié ainsi qu'il est usuel dans la technique des annuleurs d'écho.

## Revendications

1. Procédé d'annulation d'écho, dans lequel on applique un signal de réception (x(n)) en entrée d'un système générateur d'écho (1), on recueille un signal d'observation (z(n)) en sortie dudit système, on filtre le signal de réception pour produire au moins un signal (y(n)) de prédiction d'un écho du signal de réception dans le signal d'observation, et on soustrait un signal de prédiction d'écho du signal d'observation pour produire un signal d'erreur (e(n)), on décompose le signal d'observation (z(n)) en M composantes spectrales ($Z_{(i)}(m)$ ; $z_{(i)}(n')$) se rapportant à des fréquences différentes du spectre, M désignant un nombre entier plus grand que 1, on obtient M composantes spectrales correspondantes ($Y_p(m)$ ; $y_{(i)}(n')$) d'un signal de prédiction d'écho (y(n)), **caractérisé en ce qu'**on calcule M grandeurs ($msc_p(m)$ ; $\alpha_p(m)$ ; $r_{(i)}$) à partir des composantes spectrales du signal d'observation et du signal de prédiction d'écho, chacune desdites M grandeurs ayant une valeur à variation progressive représentative d'un degré de similitude entre, respectivement, l'une des M composantes spectrales du signal d'observation et la composante spectrale correspondante du signal de prédiction d'écho, et on opère au moins une mise en forme spectrale d'un signal d'erreur (e(n)) en fonction desdites M grandeurs calculées.

2. Procédé selon la revendication 1, dans lequel on on adapte le filtrage du signal de réception en fonction du signal de réception et d'un signal d'erreur, et dans lequel on opère une mise en forme spectrale du signal d'erreur (e(n)) produisant un signal d'erreur filtré (e1(n)) en fonction duquel est effectuée l'adaptation du filtrage du signal de réception (x(n)).

3. Procédé selon la revendication 1 ou 2, dans lequel on opère une mise en forme spectrale d'un signal d'erreur (e(n)) produisant un signal d'erreur post-filtré (e2(n)) émis vers un canal de communication.

4. Procédé selon l'une quelconque des revendications 1 à 3, dans lequel les M composantes spectrales ($Z_p(m)$,$Y_p(m)$) du signal d'observation (z(n)) et du signal de prédiction d'écho (y(n)) sont des composantes de Fourier de ces signaux, et dans lequel la grandeur ($msc_p(m)$) représentative du degré de similitude entre deux composantes de Fourier correspondantes ($Z_p(m)$, $Y_p(m)$) du signal d'observation et du signal de prédiction d'écho est une valeur d'une fonction de cohérence entre ces composantes de Fourier.

5. Procédé selon l'une quelconque des revendications 1 à 3, dans lequel les M composantes spectrales ($Z_p(m)$,$Y_p(m)$) du signal d'observation (z(n)) et du signal de prédiction d'écho (y(n)) sont des composantes de Fourier de ces signaux, et dans lequel la grandeur ($\alpha_p(m)$) représentative du degré de similitude entre deux composantes de Fourier correspondantes ($Z_p(m)$,$Y_p(m)$) du signal d'observation et du signal de prédiction d'écho est une valeur d'une fonction décroissante de la valeur absolue de l'angle ($\varphi_p(m)$) formé, dans le plan complexe, entre ces composantes de Fourier.

6. Procédé selon la revendication 4 ou 5, dans lequel on obtient M composantes de Fourier ($E_p(m)$) du signal d'erreur (e(n)) qui correspondent respectivement aux M composantes de Fourier ($Z_p(m)$,$Y_p(m)$) du signal d'observation (z(n)) et du signal de prédiction d'écho (y(n)), et dans lequel chaque mise en forme spectrale du signal d'erreur (e(n)) comporte une pondération de chacune de ses M composantes de Fourier ($E_p(m)$) par une quantité ayant une dépendance non linéaire de la valeur de celle des M grandeurs ($msc_p(m)$ ; $\alpha_p(m)$) qui représente le degré de similitude entre les composantes de Fourier correspondantes ($Z_p(m)$,$Y_p(m)$) du signal d'observation et du signal de prédiction d'écho.

**7.** Procédé selon la revendication 4 ou 5, dans lequel on obtient un nombre 2N au moins égal à M de composantes de Fourier ($E_k$(f)) du signal d'erreur (e(n)), dans lequel on répartit dans plusieurs sous-bandes prédéterminées les composantes de Fourier des signaux, et on calcule pour chaque sous-bande une moyenne de celles des M grandeurs ($msc_p$(m) ; $\alpha_p$(m)) qui représentent des degrés de similitude entre les composantes de Fourier relatives à ladite sous-bande du signal d'observation et du signal de prédiction d'écho, et dans lequel chaque mise en forme spectrale du signal d'erreur (e(n)) comporte une pondération de chacune de ses 2N composantes de Fourier ($E_k$(f)) par une quantité ayant une dépendance non linéaire de la moyenne calculée pour la sous-bande dont relève ladite composante de Fourier du signal d'erreur.

**8.** Procédé selon la revendication 2 et l'une quelconque des revendications 6 et 7, dans lequel, pour la production du signal d'erreur filtré (e1(n)), ladite dépendance non linéaire est définie par une fonction non linéaire croissante (FNL1).

**9.** Procédé selon la revendication 8, dans lequel on produit le signal d'erreur filtré (e1(n)) en appliquant une transformée de Fourier inverse aux composantes de Fourier pondérées ($E1_p$(m)) du signal d'erreur.

**10.** Procédé selon la revendication 8, dans lequel on effectue une transformée de Fourier du signal de réception (x(n)) pour en obtenir un nombre 2N, au moins égal à M, de composantes de Fourier ($X_k$(f)), et on produit un signal de prédiction d'écho (y(n)) sous forme de 2N composantes de Fourier ($Y_k$(f)) obtenues en pondérant les composantes de Fourier ($x_k$(f)) du signal de réception par des coefficients complexes adaptatifs respectifs, chacun de ces coefficients étant associé à une composante de Fourier pondérée ($E1_k$(f)) du signal d'erreur qui sert, avec la composante de Fourier correspondante ($X_k$(f)) du signal de réception, à adapter la valeur dudit coefficient.

**11.** Procédé selon la revendication 3 et l'une quelconque des revendications 6 et 7, dans lequel, pour la production du signal d'erreur post-filtré (e2(n)), ladite dépendance non linéaire est définie par une fonction non linéaire décroissante (FNL2), le signal d'erreur post-filtré (e2(n)) étant obtenu en appliquant une transformée de Fourier inverse aux composantes de Fourier pondérées ($E2_p$(m) ; $E2_k$(f)) du signal d'erreur.

**12.** Procédé selon l'une quelconque des revendications 1 à 3, dans lequel les M composantes spectrales ($z_{(i)}$ (n')) du signal d'observation sont obtenues par une décomposition en sous-bandes du signal d'observation (z(n)), dans lequel la même décomposition en sous-bandes est effectuée sur le signal de réception (x(n)) pour produire M composantes spectrales correspondantes ($x_{(i)}$ (n')) du signal de réception, dans lequel le signal de prédiction d'écho (y(n)) est produit sous la forme de ses M composantes spectrales ($y_{(i)}$ (n')) respectivement délivrées par M filtres adaptatifs auxquels sont respectivement appliquées les M composantes spectrales ($x_{(i)}$(n')) du signal de réception, dans lequel le signal d'erreur (e(n)) est produit sous la forme de M composantes spectrales correspondantes ($e_{(i)}$ (n')) dont chacune est obtenue en soustrayant une composante spectrale ($y_{(i)}$(n')) du signal de prédiction d'écho d'une composante spectrale correspondante ($z_{(i)}$ (n')) du signal d'observation, et dans lequel la grandeur ($r_{(i)}$) représentative du degré de similitude entre deux composantes spectrales correspondantes ($z_{(i)}$(n'),$y_{(i)}$(n')) du signal d'observation et du signal de prédiction d'écho est une valeur d'une fonction d'intercorrélation normalisée entre ces composantes spectrales.

**13.** Procédé selon la revendication 12, dans lequel chaque mise en forme spectrale du signal d'erreur (e(n)) comporte une pondération de chacune de ses M composantes spectrales ($e_{(i)}$(n')) par une quantité dépendant de façon non linéaire (FNL1, FNL2) de la valeur ($r_{(i)}$) de la fonction d'intercorrélation entre les composantes spectrales correspondantes ($z_{(i)}$(n'),$y_{(i)}$(n')) du signal d'observation et du signal de prédiction d'écho.

**14.** Procédé selon les revendications 2 et 13, dans lequel, pour la production du signal d'erreur filtré (e1(n)), la quantité de pondération de chaque composante spectrale ($e_{(i)}$ (n')) du signal d'erreur est une fonction non linéaire croissante (FNL1) de la valeur ($r_{(i)}$) de la fonction d'intercorrélation, et dans lequel chaque filtre (7) auquel est appliqué une composante spectrale ($x_{(i)}$(n')) du signal de réception est adapté en fonction de cette composante ($x_{(i)}$ (n')) et de la composante spectrale pondérée correspondante ($e1_{(i)}$ (n')) du signal d'erreur.

**15.** Procédé selon les revendications 3 et 13, dans lequel, pour la production du signal d'erreur post-filtré (e2(n)), la quantité de pondération de chaque composante spectrale ($e_{(i)}$ (n')) du signal d'erreur est une fonction non linéaire décroissante (FNL2) de la valeur ($r_{(i)}$) de la fonction d'intercorrélation, et dans lequel le signal d'erreur post-filtré (e2(n)) est obtenu par une recombinaison, duale de la décomposition en sous-bandes, des composantes spectrales pondérées ($e2_{(i)}$ (n')) du signal d'erreur.

**16.** Annuleur d'écho adaptatif, dans lequel un signal de réception (x(n)) est appliqué en entrée d'un système générateur d'écho (1) et un signal d'observation (z(n)) est obtenu en sortie dudit système, comprenant : des moyens de filtrage (7) pour produire, par filtrage du signal de réception, au moins un signal (y(n)) de prédiction d'un écho du signal de réception dans le signal d'observation ; et des moyens soustracteurs (8) pour produire un signal d'erreur (e(n)) en soustrayant un signal de prédiction d'écho du signal d'observation; des moyens (38;D') de décomposition du signal d'observation (z(n)) en M composantes spectrales $(Z_p(m) ; z_{(i)}(n'))$ se rapportant à des fréquences différentes du spectre, M désignant un nombre entier plus grand que 1 ; des moyens d'obtention (7,16,18,11,D) de M composantes spectrales correspondantes $(y_p(m); y_{(i)}(n'))$ d'un signal de prédiction d'écho, **caractérisé en ce qu'il** comprend en outre : des moyens (41.m;76) de calcul de M grandeurs $(msc_p(m) ; \alpha_p(m) ; r_{(i)})$ à partir des M composantes spectrales du signal d'observation et des M composantes spectrales correspondantes $(Y_p(m) ; y_{(i)}(n'))$ du signal de prédiction d'écho (y(n)), chacune desdites M grandeurs ayant une valeur à variation progressive représentative d'un degré de similitude entre, respectivement, l'une des M composantes spectrales du signal d'observation et la composante spectrale correspondante du signal de prédiction d'écho ; et des moyens (33,34; 77,78,79,81,R) de mise en forme spectrale du signal d'erreur (e(n)) en fonction desdites M grandeurs calculées.

**17.** Annuleur d'écho adaptatif selon la revendication 16, comprenant en outre des moyens d'adaptation (9) pour régler dynamiquement des paramètres de filtrage utilisés par les moyens de filtrage (7) en fonction du signal de réception et du signal d'erreur, dans lequel les moyens de mise en forme spectrale comprennent un filtre (33;77,78) auquel est soumis le signal d'erreur (e(n)) et dont le signal de sortie (e1(n)) est fourni aux moyens d'adaptation (9).

**18.** Annuleur d'écho adaptatif selon la revendication 16 ou 17, dans lequel les moyens de mise en forme spectrale comprennent un post-filtre (34;79,81,R) auquel est soumis le signal d'erreur (e(n)) et dont la sortie délivre le signal de sortie (e2(n)) de l'annuleur d'écho.

**19.** Annuleur d'écho adaptatif selon l'une quelconque des revendications 16 à 18, **caractérisé en ce que** les moyens (7) de filtrage du signal de réception (x(n)) sont agencés pour effectuer un filtrage dans le domaine fréquentiel.

**20.** Annuleur d'écho adaptatif selon l'une quelconque des revendication 16 à 18, **caractérisé en ce que** les moyens (7) de filtrage du signal de réception (x(n)) sont agencés pour effectuer un filtrage en M sous-bandes auxquelles sont respectivement associées les M composantes spectrales des signaux.

**Patentansprüche**

**1.** Verfahren zur Echounterdrückung, bei dem ein Empfangssignal (x(n)) an den Eingang eines Echoerzeugungssystems (1) angelegt wird, ein Beobachtungssignal (z(n)) am Ausgang des Systems entnommen wird, das Empfangssignal gefiltert wird, um mindestens ein Signal (y(n)) der Vorhersage eines Echos des Empfangssignals im Beobachtungssignal zu erzeugen, ein Echovorhersagesignal vom Beobachtungssignal subtrahiert wird, um ein Fehlersignal (e(n)) zu erzeugen, das Beobachtungssignal (z(n)) in M Spektralkomponenten $(Z_p(m) ; z_{(i)}(n'))$ zerlegt wird, die sich auf unterschiedliche Frequenzen des Spektrums beziehen, wobei M eine ganze Zahl größer 1 bezeichnet, M entsprechende Spektralkomponenten $(Y_p(m) : y_{(i)}(n'))$ eines Echovorhersagesignals (y(n)) erhalten werden, **dadurch gekennzeichnet, dass** M Größen $(msc_p(m) ; \alpha_p(m) ; r_{(i)})$ ausgehend von den Spektralkomponenten des Beobachtungssignals und des Echovorhersagesignals berechnet werden, wobei jede der M Größen einen Wert mit progressiver Veränderung hat, der für einen Ähnlichkeitsgrad zwischen je einer der M Spektralkomponenten des Beobachtungssignals und der entsprechenden Spektralkomponente des Echovorhersagesignals repräsentativ ist, und dass mindestens eine spektrale Formgebung eines Fehlersignals (e(n)) in Abhängigkeit von den M berechneten Größen durchgeführt wird.

**2.** Verfahren nach Anspruch 1, bei dem die Filterung des Empfangssignals in Abhängigkeit vom Empfangssignal und einem Fehlersignal angepasst wird und eine spektrale Formgebung des Fehlersignals (e(n)) durchgeführt wird, die ein gefiltertes Fehlersignal (e1(n)) ergibt, wobei die Anpassung der Filterung des Empfangssignals (x(n)) abhängig von diesem Fehlersignal durchgeführt wird.

**3.** Verfahren nach Anspruch 1 oder 2, bei dem eine spektrale Formgebung eines Fehlersignals (e(n)) erfolgt, die ein nachgefiltertes Fehlersignal (e2(n)) produziert, das zu einem Verbindungskanal gesendet wird.

**4.** Verfahren nach einem der Ansprüche 1 bis 3, bei dem die M Spektralkomponenten, $(Z_p(m), Y_p(m))$ des Beobachtungssignals (z(n)) und des Echovorhersagesignals (y(n)) Fourierkomponenten dieser Signale sind und die Größe

(msc$_p$(m)), die für den Ähnlichkeitsgrad zwischen zwei entsprechenden Fourierkomponenten (Z$_p$(m), Y$_p$(m)) des Beobachtungssignals und des Echovorhersagesignals repräsentativ ist, ein Wert einer Kohärenzfunktion zwischen diesen Fourierkomponenten ist.

5. Verfahren nach einem beliebigen der Ansprüche 1 bis 3, bei dem die M Spektralkomponenten (Z$_p$(m), Y$_p$(m)) des Beobachtungssignals (z(n)) und des Echovorhersagesignals (y(n)) Fourierkomponenten dieser Signale sind, und wobei die Größe (α$_p$(m)), die für den Ähnlichkeitsgrad zwischen zwei Fourierkomponenten (Z$_p$(m), Y$_p$(m)) des Beobachtungssignals bzw. des Echovorhersagesignals repräsentativ ist, ein Wert einer abnehmenden Funktion des Absolutwerts des in der komplexen Ebene zwischen diesen Fourierkomponenten gebildeten Winkels (φ$_p$(m)) ist.

6. Verfahren nach Anspruch 4 oder 5, bei dem M Fourierkomponenten (E$_p$(m) des Fehlersignals (e(n)) erhalten werden, die den M Fourierkomponenten (Z$_p$(m), Y$_p$(m)) des Beobachtungssignals (z(n)) bzw. des Echovorhersagesignals (y(n)) entsprechen, und jede spektrale Formgebung des Fehlersignals (e(n)) eine Gewichtung jeder seiner M Fourierkomponenten (Ep(m)) mit einer Größe aufweist, die eine nicht-lineare Abhängigkeit vom Wert derjenigen der M Größen (msc$_p$(m); α$_p$(m)) hat, die den Ähnlichkeitsgrad zwischen den Fourierkomponenten (Z$_p$(m), Y$_p$(m)) des Beobachtungssignals bzw. des Echovorhersagesignals repräsentiert.

7. Verfahren nach Anspruch 4 oder 5, bei dem eine Anzahl 2N mindestens gleich M von Fourierkomponenten (E$_k$(f)) des Fehlersignals (e(n)) erhalten wird, wobei die Fourierkomponenten der Signale in mehrere vorbestimmte Unterbereiche verteilt werden, und für jeden Unterbereich ein Mittelwert derjenigen der M Größen (msc$_p$(m) ; α$_p$(m)) berechnet wird, die Ähnlichkeitsgrade zwischen den Fourierkomponenten bezüglich des Unterbereichs des Beobachtungssignals und des Echovorhersagesignals repräsentieren, und wobei jede spektrale Formgebung des Fehlersignals (e(n)) eine Gewichtung jeder seiner 2N Fourierkomponenten (E$_k$(f)) durch eine Größe enthält, die eine nicht-lineare Abhängigkeit des für den Unterbereich berechneten Mittelwerts aufweist, aus dem die Fourierkomponente des Fehlersignals stammt.

8. Verfahren nach Anspruch 2 und einem beliebigen der Ansprüche 6 und 7, bei dem zur Erzeugung des gefilterten Fehlersignals (e1(n)) die nicht-lineare Abhängigkeit durch eine zunehmende nicht-lineare Funktion (FNL1) definiert wird.

9. Verfahren nach Anspruch 8, bei dem das gefilterte Fehlersignal (e1(n)) erzeugt wird, indem eine inverse Fourier-Transformierte auf die gewichteten Fourierkomponenten (E1p(m)) des Fehlersignals angewendet wird.

10. Verfahren nach Anspruch 8, bei dem eine Fourier-Transformierte des Empfangssignals (x(n)) gebildet wird, um eine Anzahl 2N mindestens gleich M von Fourierkomponenten (X$_k$(f)) zu erhalten, und ein Echovorhersagesignal (y(n)) in Form von 2N Fourierkomponenten (Y$_k$(f)) erzeugt wird, die durch Gewichtung der Fourierkomponenten (X$_k$(f)) des Empfangssignals durch jeweilige komplexe adaptive Koeffizienten erhalten werden, wobei jeder dieser Koeffizienten einer gewichteten Fourierkomponente (E1$_k$(f)) des Fehlersignals zugeordnet ist, die mit der entsprechenden Fourierkomponente (X$_k$(f)) des Empfangssignals dazu dient, den Wert des Koeffizienten anzupassen.

11. Verfahren nach Anspruch 3 und einem der Ansprüche 6 und 7, bei dem zur Erzeugung des nachgefilterten Fehlersignals (e2(n)) die nicht-lineare Abhängigkeit durch eine nicht-lineare abnehmende Funktion (FNL2) definiert wird, wobei das nachgefilterte Fehlersignal (e2(n)) erhalten wird, indem eine inverse Fourier-Transformierte auf die gewichteten Fourierkomponenten (E2$_p$(m); E2$_k$(f)) des Fehlersignals angewendet wird.

12. Verfahren nach einem der Ansprüche 1 bis 3, bei dem die M Spektralkomponenten (z$_{(i)}$(n')) des Beobachtungssignals durch eine Zerlegung des Beobachtungssignals (z(n)) in Unterbereiche erhalten werden und die gleiche Zerlegung in Unterbereiche beim Empfangssignal (x(n)) durchgeführt wird, um M entsprechende Spektralkomponenten (x$_{(i)}$(n')) des Empfangssignals zu erhalten, wobei das Echovorhersagesignal (y(n)) in Form seiner M Spektralkomponenten (y$_{(i)}$(n')) erzeugt wird, die von M adaptiven Filtern geliefert werden, an die die M Spektralkomponenten (x$_{(i)}$(n')) des Empfangssignals angelegt werden, während das Fehlersignal (e(n)) in Form von M entsprechenden Spektralkomponenten (e$_{(i)}$(n')) erzeugt wird, von denen jede erhalten wird, indem eine Spektralkomponente (y$_{(i)}$(n')) des Echovorhersagesignals von einer entsprechenden Spektralkomponente (z$_{(i)}$(n')) des Beobachtungssignals subtrahiert wird, wobei die Größe (r$_{(i)}$), die für den Ähnlichkeitsgrad zwischen zwei entsprechenden Spektralkomponenten (z$_{(i)}$(n'), y$_{(i)}$(n')) des Beobachtungssignals und des Echovorhersagesignals repräsentativ ist, ein Wert einer normalisierten Interkorrelationsfunktion zwischen diesen Spektralkomponenten ist.

**13.** Verfahren nach Anspruch 12, bei dem jede spektrale Formgebung des Fehlersignals (e(n)) eine Gewichtung jeder seiner M Spektralkomponenten ($e_{(i)}$(n'')) durch eine Größe aufweist, die in nichtlinearer Weise (FNL1, FNL2) vom Wert ($r_{(i)}$) der Interkorrelationsfunktion zwischen den entsprechenden Spektralkomponenten ($z_{(i)}$(n'), $y_{(i)}$(n')) des Beobachtungssignals und des Echovorhersagesignals abhängt.

**14.** Verfahren nach den Ansprüchen 2 und 13, bei dem zur Erzeugung des gefilterten Fehlersignals (e1(n)) die Gewichtungsgröße jeder Spektralkomponente ($e_{(i)}$(n')) des Fehlersignals eine zunehmende nicht-lineare Funktion (FNL1) des Werts ($r_{(i)}$) der Interkorrelationsfunktion ist, und jedes Filter (7), an das eine Spektralkomponente ($x_{(i)}$(n')) des Empfangssignals angelegt wird, in Abhängigkeit von dieser Komponente ($x_{(i)}$(n')) und der entsprechenden gewichteten Spektralkomponente ($e1_{(i)}$(n')) des Fehlersignals angepasst wird.

**15.** Verfahren nach den Ansprüchen 3 und 13, bei dem zur Erzeugung des nachgefilterten Fehlersignals (e2(n)) die Gewichtungsgröße jeder Spektralkomponente ($e_{(i)}$(n')) des Fehlersignals eine nicht-lineare, abnehmende Funktion (FNL2) des Werts ($r_{(i)}$) der Interkorrelationsfunktion ist und das nachgefilterte Fehlersignal (e2(n)) durch eine duale Rekombination der Zerlegung der gewichteten Spektralkomponente ($e2_{(i)}$(n')) des Fehlersignals in Unterbereiche erhalten wird.

**16.** Adaptiver Echounterdrücker, bei dem ein Empfangssignal (x(n)) an den Eingang eines Echoerzeugersystems (1) angelegt und ein Beobachtungssignal (z(n))am Ausgang des Systems erhalten wird, mit Filtermitteln (7), um durch Filterung des Empfangssignals mindestens ein Signal (y(n)) zur Vorhersage eines Echos des Empfangssignals im Beobachtungssignal zu erzeugen, mit Subtrahiermitteln (8), um ein Fehlersignal (e(n)) zu erzeugen, indem ein Echovorhersagesignal vom Beobachtungssignal subtrahiert wird, mit Mitteln (38; D') zur Zerlegung des Beobachtungssignals (z(n)) in M Spektralkomponenten ($Z_p$(m); $z_{(i)}$(n')), die sich auf unterschiedliche Frequenzen des Spektrums beziehen, wobei M eine ganze Zahl größer 1 bezeichnet, und mit Mitteln (7, 16, 18, 11, D) zum Erhalt von M entsprechenden Spektralkomponenten ($Y_p$(m); $y_{(i)}$(n') eines Echovorhersagesignals, **dadurch gekennzeichnet, dass** er außerdem aufweist: Mittel (41.m; 76) zur Berechnung von M Größen ($msc_p$(m) ; $\alpha_p$(m) ; $r_{(i)}$) ausgehend von den M Spektralkomponenten des Beobachtungssignals und der M entsprechenden Spektralkomponenten ($Y_p$(m); $y_{(i)}$(n')) des Echovorhersagesignals (y(n)), wobei jede der M Größen einen Wert mit progressiver Veränderung hat, der für einen Ähnlichkeitsgrad zwischen einer der M Spektralkomponenten des Beobachtungssignals und der entsprechenden Spektralkomponente des Echovorhersagesignals repräsentativ ist; und Mittel (33, 34; 77, 78, 79, 81, R) zur spektralen Formgebung des Fehlersignals (e(n)) in Abhängigkeit von den M berechneten Größen.

**17.** Adaptiver Echounterdrücker nach Anspruch 16, der außerdem Anpassungsmittel (9) aufweist, um Filterungsparameter, die von den Filtermitteln (7) verwendet werden, dynamisch in Abhängigkeit vom Empfangssignal und vom Fehlersignal einzustellen, wobei die spektralen Formgebungsmittel ein Filter (33; 77, 78) aufweisen, in dem das Fehlersignal (e(n)) gefiltert wird, und dessen Ausgangssignal (e1(n)) an die Anpassungsmittel (9) geliefert wird.

**18.** Adaptiver Echounterdrücker nach Anspruch 16 oder 17, bei dem die spektralen Formgebungsmittel ein Nachfilter (34; 79, 81, R) aufweisen, in dem das Fehlersignal (e(n)) gefiltert wird und dessen Ausgang das Ausgangssignal (e2(n)) des Echounterdrückers liefert.

**19.** Adaptiver Echounterdrücker nach einem der Ansprüche 16 bis 18, **dadurch gekennzeichnet, dass** die Mittel (7) zum Filtern des Empfangssignals (x(n)) ausgebildet sind, um eine Filterung im Frequenzbereich durchzuführen.

**20.** Adaptiver Echounterdrücker nach einem der Ansprüche 16 bis 18, **dadurch gekennzeichnet, dass** die Mittel (7) zum Filtern des Empfangssignals (x(n)) ausgebildet sind, um eine Filterung in M Unterbereichen durchzuführen, denen die M Spektralkomponenten der Signale zugeordnet sind.

**Claims**

**1.** An echo cancellation method, wherein a reception signal (x(n)) is input to an echo generator system (1), an observation signal (z(n)) is gathered from said system, the reception signal is filtered so as to produce at least one echo prediction signal (y(n)) for predicting an echo of the reception signal in the observation signal, an echo prediction signal is subtracted from the observation signal so as to produce an error signal (e(n)), the observation signal (z(n)) is decomposed into M spectral components ($Z_p$(m); $Z_{(i)}$(n')) relating to different frequencies of the spectrum, M denoting an integer greater than 1, M corresponding spectral components ($Y_p$(m);$Y_{(i)}$(n')) of an echo predicttion signal (y(n)) are obtained, **characterized in that** M quantities ($msc_p$(m); $\alpha_p$(m); $r_{(i)}$) are calculated from

the spectral components of the observation signal and of the echo prediction signal, each of said M quantities having a value with progressive variation representative of a degree of similitude between, respectively, one of the M spectral components of the observation signal and the corresponding spectral component of the echo prediction signal, and at least one spectral shaping of an error signal (e(n)) is carried out as a function of said M calculated quantities.

2.  A method according to Claim 1, wherein the filtering of the reception signal is adapted as a function of the reception signal and of an error signal, and wherein a spectral shaping of the error signal (e(n)) is carried out, producing a filtered error signal (e1(n)) as a function of which the adaptation of the filtering of the reception signal (x(n)) is performed.

3.  A method according to Claim 1 or 2, wherein a spectral shaping of an error signal (e(n)) is carried out, producing a post-filtered error signal (e2(n)) transmitted towards a communication channel.

4.  A method according to any one of Claims 1 to 3, wherein the M spectral components $(Z_p(m), Y_p(m))$ of the observation signal (z(n)) and of the echo prediction signal (y(n)) are Fourier components of said signals, and wherein the quantity $(msc_p(m))$ representative of the degree of similitude between two corresponding Fourier components $(Z_p(m), Y_p(m))$ of the observation signal and of the echo prediction signal is a value of a function of coherence between said two Fourier components.

5.  A method according to any one of Claims 1 to 3, wherein the M spectral components $(Z_p(m), Y_p(m))$ of the observation signal (z(n)) and of the echo prediction signal (y(n)) are Fourier components of said signals, and wherein the quantity $(\alpha_p(m))$ representative of the degree of similitude between two corresponding Fourier components $(Z_p(m), Y_p(m))$ of the observation signal and of the echo prediction signal is a value of a decreasing function of the absolute value of the angle $(\varphi_p(m))$ formed, in the complex plane, between said two Fourier components.

6.  A method according to Claim 4 or 5, wherein M Fourier components $(E_p(m))$ of the error signal (e(n)) are obtained, which correspond respectively to the M Fourier components $(Z_p(m), Y_p(m))$ of the observation signal (z(n)) and of the echo prediction signal (y(n)), and wherein each spectral shaping of the error signal (e(n)) includes a weighting of each of the M Fourier components thereof $(E_p(m))$ by an amount having a non-linear dependence on the value of that of the M quantities $(msc_p(m); \alpha_p(m))$ which represents the degree of similitude between the corresponding Fourier components $(Z_p(m), Y_p(m))$ of the observation signal and of the error prediction signal.

7.  A method according to Claim 4 or 5, wherein a number 2N at least equal to M of Fourier components $(E_k(f))$ of the error signal (e(n)) is obtained, wherein the Fourier components of the signals are distributed into several predetermined sub-bands, and for each sub-band a mean value of those of the M quantities $(msc_p(m); \alpha_p(m))$ which represent degrees of similitude between the Fourier components relating to said sub-band of the observation signal and of the echo prediction signal are calculated, and wherein each spectral shaping of the error signal (e(n)) includes a weighting of each of the 2N Fourier components thereof $(E_k(f))$ by an amount having a non-linear dependence on the mean value calculated for the sub-band pertaining to said Fourier component of the error signal.

8.  A method according to Claim 2 and any one of Claims 6 and 7, wherein, for the production of the filtered error signal (e1(n)), said non-linear dependence is defined by an increasing non-linear function (FNL1).

9.  A method according to Claim 8, wherein the filtered error signal (e1(n)) is produced by applying an inverse Fourier transform to the weighted Fourier components $(E1_p(m))$ of the error signal.

10. A method according to Claim 8, wherein a Fourier transform of the reception signal (x(n)) is performed so as to obtain a number 2N, at least equal to M, of Fourier components $(X_k(f))$, and an echo prediction signal (y(n)) is produced in the form of 2N Fourier components $(Y_k(f))$ obtained by weighting the Fourier components $(X_k(f))$ of the reception signal by respective adaptive complex coefficients, each of said coefficients being associated with a weighted Fourier component $(E1_k(f))$ of the error signal which is used, with the corresponding Fourier component $(X_k(f))$ of the reception signal, to adapt the value of said coefficient.

11. A method according to Claim 3 and any one of Claims 6 and 7, wherein, for the production of the post-filtered error signal (e2(n)), said non-linear dependence is defined by a decreasing non-linear function (FNL2), the post-filtered error signal (e2(n)) being obtained by applying an inverse Fourier transform to the weighted Fourier components $(E2_p(m); E2_k(f))$ of the error signal.

**12.** A method according to any one of Claims 1 to 3, wherein the M spectral components ($z_{(i)}(n')$) of the observation signal are obtained by a sub-band decomposition of the observation signal ($z(n)$), wherein the same sub-band decomposition is performed on the reception signal ($x(n)$) so as to produce M corresponding spectral components ($x_{(i)}(n')$) of the reception signal, wherein the echo prediction signal ($y(n)$) is produced in the form of M spectral components thereof ($y_{(i)}(n')$) respectively delivered by M adaptive filters to which the M spectral components ($x_{(i)}(n')$) of the reception signal are respectively applied, wherein the error signal ($e(n)$) is produced in the form of M corresponding spectral components ($e_{(i)}(n')$) each of which is obtained by subtracting a spectral component ($y_{(i)}(n')$) of the echo prediction signal from a corresponding spectral component ($z_{(i)}(n')$) of the observation signal, and wherein the quantity ($r_{(i)}$) representative of the degree of similitude between two corresponding spectral components ($z_{(i)}(n'),y_{(i)}(n')$) of the observation signal and of the echo prediction signal is a value of a function of normalized intercorrelation between said two spectral components.

**13.** A method according to Claim 12, wherein each spectral shaping of the error signal ($e(n)$) includes a weighting of each of the M spectral components thereof ($e_{(i)}(n')$) by an amount depending in a non-linear manner (FNL1,FNL2) on the value ($r_{(i)}$) of the intercorrelation function between the corresponding spectral components ($z_{(i)}(n'),y_{(i)}(n')$) of the observation signal and of the echo prediction signal.

**14.** A method according to Claims 2 and 13, wherein, for the production of the filtered error signal ($e1(n)$), the amount for weighting each spectral component ($e_{(i)}(n')$) of the error signal is an increasing non-linear function (FNL1) of the value ($r_{(i)}$) of the intercorrelation function, and wherein each filter (7) to which a spectral component ($x_{(i)}(n')$) of the reception signal is applied is adapted as a function of said component ($x_{(i)}(n')$) and of the corresponding weighted spectral component ($e1_{(i)}(n')$) of the error signal.

**15.** A method according to Claims 3 and 13, wherein, for the production of the post-filtered error signal ($e2(n)$), the amount for weighting each spectral component ($e_{(i)}(n')$) of the error signal is a decreasing non-linear function (FNL2) of the value ($r_{(i)}$) of the intercorrelation function, and wherein the post-filtered error signal ($e2(n)$) is obtained by a recombination, dual of the sub-band decomposition, of the weighted spectral components ($e2_{(i)}(n')$) of the error signal.

**16.** Adaptive echo canceller, wherein a reception signal ($x(n)$) is input to an echo generator system (1) and an observation signal ($z(n)$) is obtained from said system, comprising: filtering means (7) for producing, by filtering the reception signal, at least one echo prediction signal ($y(n)$) for predicting an echo of the reception signal in the observation signal; and subtracter means (8) for producing an error signal ($e(n)$) by subtracting an echo prediction signal from the observation signal; means (38;D') for decomposing the observation signal ($z(n)$) into M spectral components ($Z_p(m);Z_{(i)}(n')$) relating to different frequencies of the spectrum, M denoting an integer greater than 1; means (7,16,18,11,D) for obtaining M corresponding spectral components ($Y_p(m);y_{(i)}(n')$) of an echo prediction signal, **characterized in that** it further comprises means (41.m;76) for calculating M quantities ($msc_p(m);\alpha_p(m);r_{(i)}$) from the M spectral components of the observation signal and the M corresponding spectral compo-nents ($Y_p(m);Y_{(i)}(n')$) of the echo prediction signal ($y(n)$), each of, said M quantities having a value with progressive variation representative of a degree of similitude between, respectively, one of the M spectral components of the observation signal and the corresponding spectral component of the echo prediction signal; and means (33,34;77,78,79,81,R) for spectral shaping of the error signal ($e(n)$) as a function of said M calculated quantities.

**17.** Adaptive echo canceller according to Claim 16, further comprising adaptation means (9) for dynamically adjusting filtering parameters used by the filtering means (7) as a function of the reception signal and of the error signal, wherein the spectral shaping means comprise a filter (33;77,78) to which the error signal ($e(n)$) is fed and from which the output signal ($e1(n)$) is supplied to the adaptation means (9).

**18.** Adaptive echo canceller according to Claim 16 or 17, wherein the spectral shaping means comprise a post-filter (34;79,81,R) to which the error signal ($e(n)$) is fed and the output from which delivers the output signal ($e2(n)$) from the echo canceller.

**19.** Adaptive echo canceller according to any one of Claims 16 to 18, **characterized in that** the means (7) for filtering the reception signal ($x(n)$) are arranged to perform a filtering in the frequency domain.

**20.** Adaptive echo canceller according to any one of Claims 16 to 18, **characterized in that** the means (7) for filtering the reception signal ($x(n)$) are arranged to perform a filtering in M sub-bands with which the M spectral components of the signals are respectively associated.

# FIG.1.

# FIG.6.

FIG. 2.

FIG.3.

EP 0 854 626 B1

FIG.4.

FIG.5.

FIG.13.

19

FIG.7.

EP 0 854 626 B1

FIG.8.

FIG.9.

FIG.10.

FIG.11.

FIG.12.